# EUROPEAN PATENT APPLICATION

(11) **EP 3 581 522 A1**
(43) Date of publication of application: **18.12.2019**
(21) Application number: 18177507.3
(22) Date of filing: 13.06.2018
(51) Int. Cl.: B65G 1/02, B65G 1/06, B65G 1/04

(54) **STORAGE SYSTEM AND A PRE-MOUNTED TRANSPORT SUPPORTING ARRANGEMENT**

(71) Applicant: Logevo AB, 34324 Älmhult (SE)
(72) Inventor: EKENBERG, Mats, 343 24 ÄLMHULT (SE)
(74) Representative: Hansson Thyresson AB

(57) **Abstract**

A storage system for handling and storing goods and/or pallets (10, 10'), including a first set of pre-mounted side units (12) and a second set of pre-mounted side units (12'), wherein each side unit has at least two vertical beams. The side units of each set are arranged beam to beam, spaced apart and subsequently of each other. The second set of side units (12') is arranged spaced and opposite of said first set of side units (12). The storage system further includes at least two spaced apart elongated rail units (20a, 20b) arranged between the first set and second set of side units (12, 12'), where each rail unit (20a, 20b) has at least one rail (25a, 25b), on which a transportation unit can operate. The rail units (20a, 20b) extend parallel to the extension of the first and second set of side units (12, 12'). Yet further, the storage system includes at least one central support unit (28) arranged between the rail units (20a, 20b), having a support portion (29) extending parallel to the extension of the rails (25a, 25b).

## Description

### TECHNICAL FIELD

The present invention relates to a storage system for storing and handling pallets and goods, and a pre-mounted transport supporting arrangement.

### BACKGROUND

Goods storage systems today tend to grow larger and larger and get more and more automated with less manual handling. Often the storage system is an arrangement of storage levels and storage rows creating a complex system. The storage systems should be able to handle the supply of goods to the number of storage levels and storage rows entering the storage system, the storage of the goods in predetermined positions within the storage system and picking of goods exiting the storage system.

Many storage systems today use standard components which tend to be bulky and heavy when storing and handling the goods. These types of components often does not have an impact on a smaller storage system but for a larger storage system, often handling many different types of goods when it comes to size and/or weight, could mean that the total weight of these components has a negative effect on the construction.

### SUMMARY

An object of the present invention is to provide improvements over prior art. This object is achieved by a technique defined in the appended independent claims; certain embodiments being set forth in the related dependent claims.

In a first aspect of the present invention, there is provided a storage system for handling and storing pallets and/or goods, including a first set of pre-mounted side units and a second set of pre-mounted side units, where each side unit has at least two vertical beams and where the side units of each set are arranged beam to beam, spaced apart and subsequently of each other. The second set of side units is arranged spaced and opposite of the first set of side units. The storage system further includes at least two spaced apart elongated rail units arranged between the first set and the second set of side units, where each elongated rail unit has at least one rail, on which a transportation unit can operate, extending parallel to the extension of the first and second set of side units. Yet further, the storage system includes at least one central support unit arranged between the rail units, having a support portion extending parallel to the extension of the rails and configured to support pallets and/or goods during storage. The first set of side units, the second set of side units, the rail units and the centrals support unit are arranged to create a storage row of a storage level of the storage system. The storage system as defined above is configured to handle and store pallets and goods of different types and of different weights. Especially, the storage system is configured to handle and store pallets which are of a different kind than the standard pallet, for example a pallet made of paper, which is not as heavy as the standard pallet made of wood.

In a preferred embodiment the storage system further includes at least one base unit arranged between and mounted to the first and second set of side units, perpendicular to the extension of the sets of the side units, where the base unit is configured to support the at least two elongated rail units. This is preferred as it even more increases the stability and the strength of the storage system.

In an embodiment the storage system includes several base units arranged throughout the extension of the storage row. It may be beneficial to have several base units arranged throughout the storage row in order to created more airy rows in which it is easier to reach the components in case something needs to be repaired or exchanged.

In an alternative embodiment the base unit extends throughout the extension of the storage row. This may be beneficial to decrease the number of components without compromising the stability and strength of the storage system.

The at least two elongated rail units, the at least one central support unit and the at least one base unit may be components of a pre-fabricated transport supporting arrangement. This is an advantage if the time consumption of the construction of the storage system is a factor which needs to be kept as short as possible.

In an embodiment the central support unit further has a number of support legs arranged spaced apart along the extension of the support portion. These support legs contribute to an even more rigid construction throughout the storage system.

In order for a transportation unit to be able to effortlessly move in the storage system each support leg may be hinged to either the base unit or to the support portion. In this way, the support legs can easily be removed from the path of the transportation unit without affecting the efficiency of the transportation unit.

Each support leg may be able to pivot about 180 degrees around the hinge. This is advantageous if it is desired for the transportation unit to be able to operate in both directions of the storage row.

In an embodiment, each elongated rail unit further has a rest portion on which pallets and goods can rest during storage. The pallets and goods are then even more supported by the storage system.

In another embodiment the storage system further includes a transportations unit for transporting pallets and goods in the storage row of the storage level, where the transportation unit is configured to run on the rails.

In yet another embodiment the transportation unit is configured to affect and push on the support legs of the central support unit as it moves along the storage row. In order to create a self-working operation when there are support legs operating in the storage rows, this embodiment is preferred.

The transportation unit may further be provided with lifting means configured to lift the pallet and/or goods during transportation and lower the pallet and/or goods when placing it at the desired storing location in said storage system.

In a second aspect of the invention there is provided a pre-mounted transport supporting arrangement for a storage system including at least two spaced apart elongated rail units, each having at least one rail, on which a transportation unit can operate, where the rail extends parallel to an extension of a storage row of the storage system in a mounted state. The pre-mounted transport supporting arrangement further includes at least one base unit extending perpendicular to the extension of the rail and configured to support the at least two elongated rail units, and at least one central support unit arranged between the rail units and supported by the at least one base unit. The central support unit includes a support portion extending parallel to the extension of the rails and configured to support goods and/or pallets when stored in the storage system. This pre-mounted transport supporting arrangement mitigates the construction of the storage system by decreasing time consuming assembly operations. At the same time, it creates a solid and strong construction for bearing pallets and goods of varying weight.

In an embodiment the central support unit further has a number of support legs hinged to either the support portion or the base unit, where each support leg is configured to pivot about 180 degrees around the hinge. This is advantageous if a transportation unit should be able to operate back and forth, in both directions, in a storage level of the storage system.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a schematic top view of several storage rows of a storage system according to an embodiment of the present invention,
Fig. 2 is a schematic top view of a part of a storage row in Fig. 1,
Fig. 3 is a schematic side view of several storage levels of the storage system in Fig. 1,
Fig. 4 is a schematic side view of goods stored in a storage row of a storage level of a storage system illustrated in Fig. 1,
Fig. 5 is a schematic cross sectional front view of several storage levels of the storage system in Fig. 1,
Fig. 6 is a schematic cross sectional front view of several storage rows and storage levels of the storage system in Fig. 1, with operating transportation units of different kinds,
Fig. 7 is a schematic side view of goods being transported by a transportation unit, according to an embodiment, in a storage row of the storage system,
Fig. 8 is a schematic front view of the transportation unit in Fig. 7, in the storage row of the storage system,

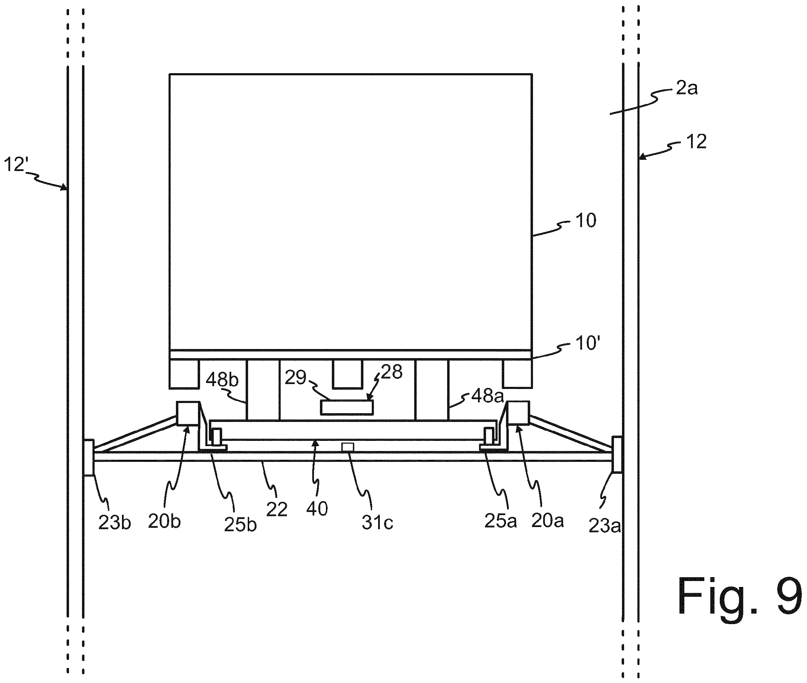

Fig. 9 is a schematic side view of goods being transported by a transportation unit, according to another embodiment, in a storage row of the storage system,
Fig. 10 is a schematic front view of the transportation unit in Fig. 9, in the storage row of the storage system.

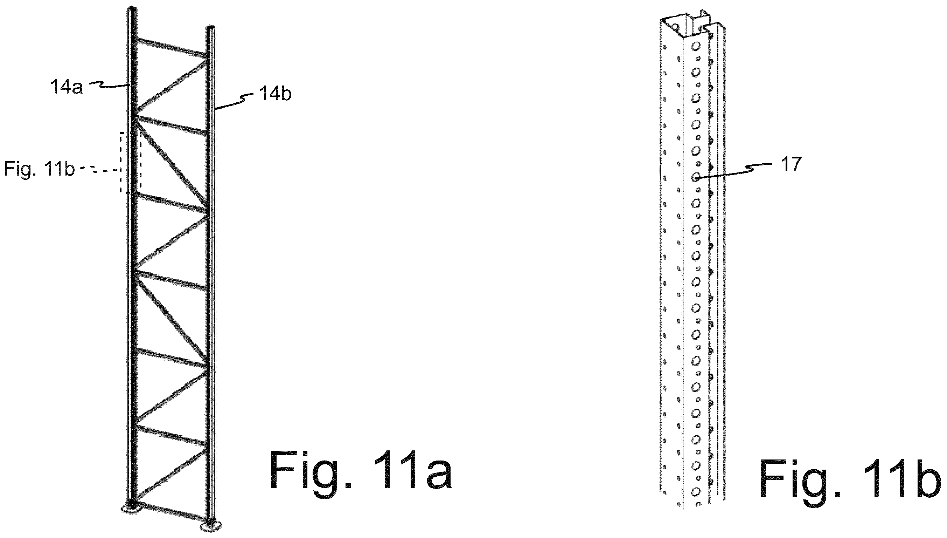

Fig. 11a is a perspective view of a side unit according to an embodiment of the present invention,
Fig. 11b is a detailed view of a beam of the side unit in Fig. 9a,

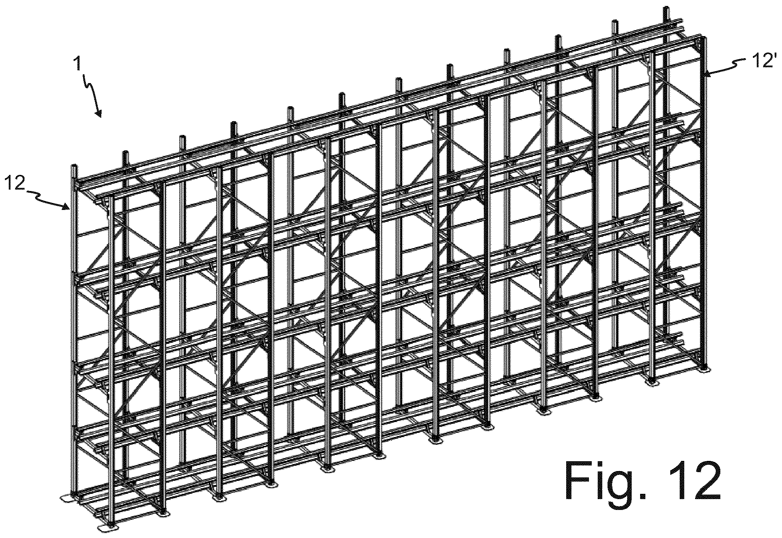

Fig. 12 is a perspective view an assembly of a first storage row with multiple storage levels of the storage system, and

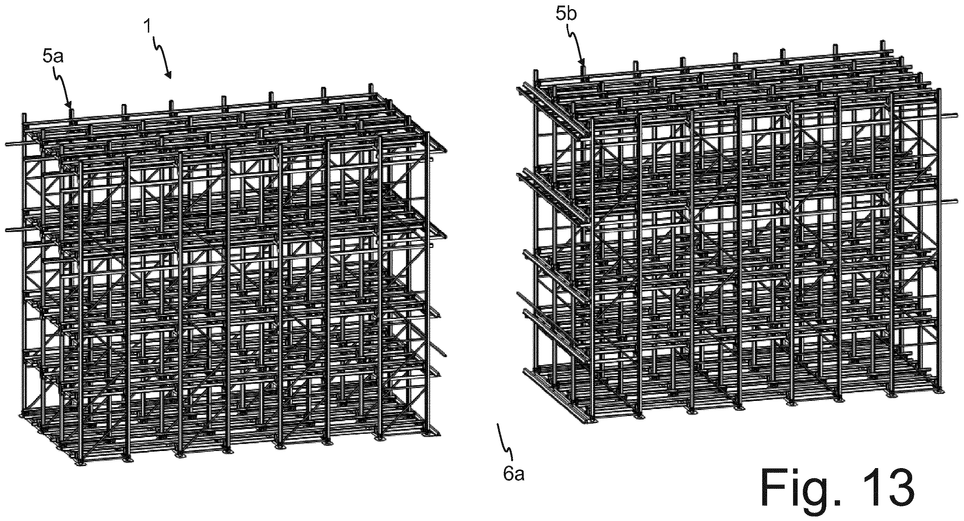

Fig. 13 is a perspective view of two storage sections, according to an embodiment of the invention, and an intermediate transportation aisle.

### DETAILED DESCRIPTION OF EMBODIMENTS

Illustrated in the drawings is a storage system 1 for handling and storing different types of pallets and goods 10, 10'. The goods are often stored on a pallet 10' as a load carrier but in the illustrated embodiment the pallet 10' does not have to be a standard pallet often used in storage systems today, but a pallet 10' made of paper board having a base and optionally feet, which is not as heavy as a standard pallet, which are often made of wood. The paper board pallet 10' as a load carrier is easier to handle and costs less to produce, handle and store than a standard pallet. However, such a paper board pallet 10' may not be as rigid as a standard pallet but this is compensated by a central support unit 28 in the storage system 1, which will be described in detail below. The described storage system 1 may of course still use a standard pallet as a load carrier.

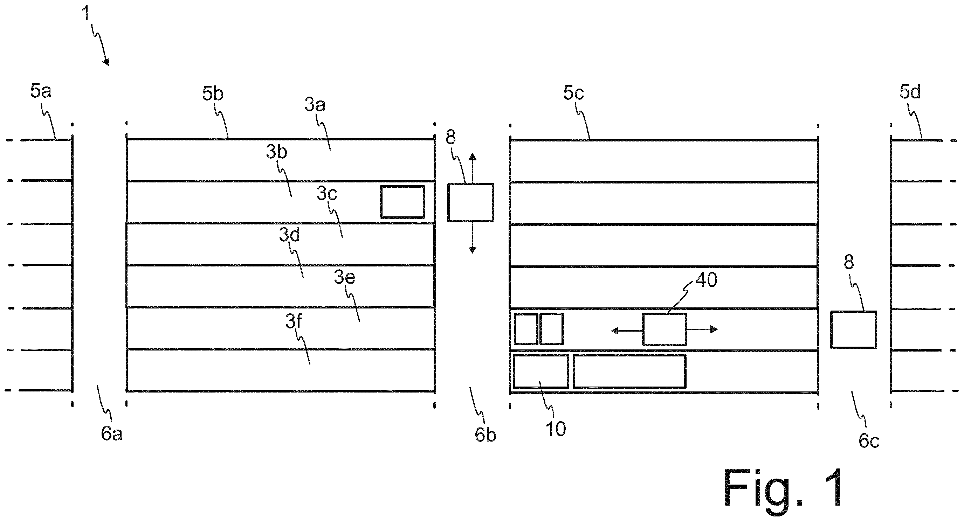

The storage system 1 is constructed in several storage levels 2a-c with several storage rows 3a-f, in several storage sections 5a-d. The storage sections 5a-d are separated be transportation aisles 6a-c in which goods 10 are transported to and from their storage location. The transportation aisles 6a-c are designed to support different types of transportation units 8. One type of transportations unit 8 may be a supply transfer cart for transporting goods 10 to be supplied within the storage system 1 and another type of transportation unit may be a picker transfer cart for transporting picked up goods 10 from within the storage system 1. Further, the transportation aisles 6a-c are arranged perpendicular to the storage rows 3a-f on every storage level 2a-d see Fig. 1.

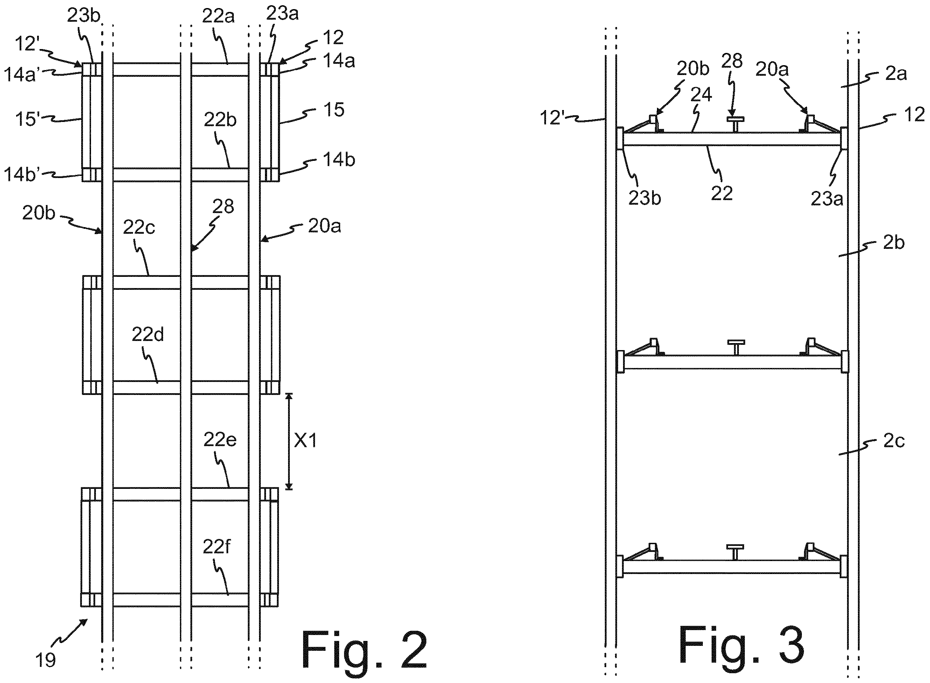

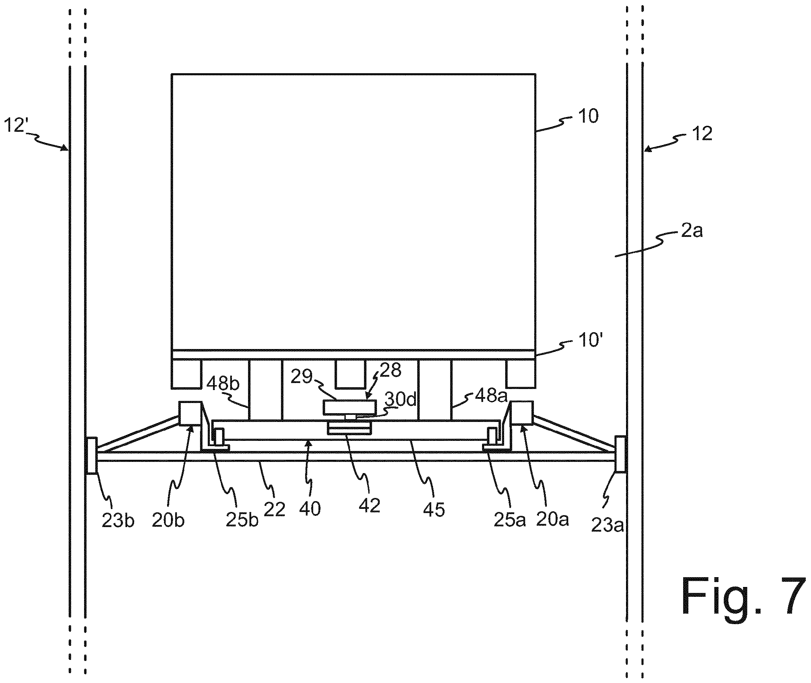

Each storage section 5a-d, with its storage rows 3a-f and storage levels 2a-d, are constructed to include several pre-mounted side units 12a-c. A first set of side units 12 and a second set of side units 12' creates the sides of a first storage row 3, see e.g. Fig. 2. Each side unit 12a-c of each set 12, 12' has two vertical beams 14a, 14b, 14a', 14b' and in between a plurality of racks 15. The beams 14a, 14b, 14a', 14b' are preferably hollow with several openings 17, see Fig. 7b, provided along the extension of the beams 14a, 14b. The openings 17 are to be used as connection means when connecting the first set of side units 12 with the opposite second set of side units 12'. For example, a base unit 22 or rail units 20a, 20b may be attached by hooking to the openings 17 of the side units 12, 12'.

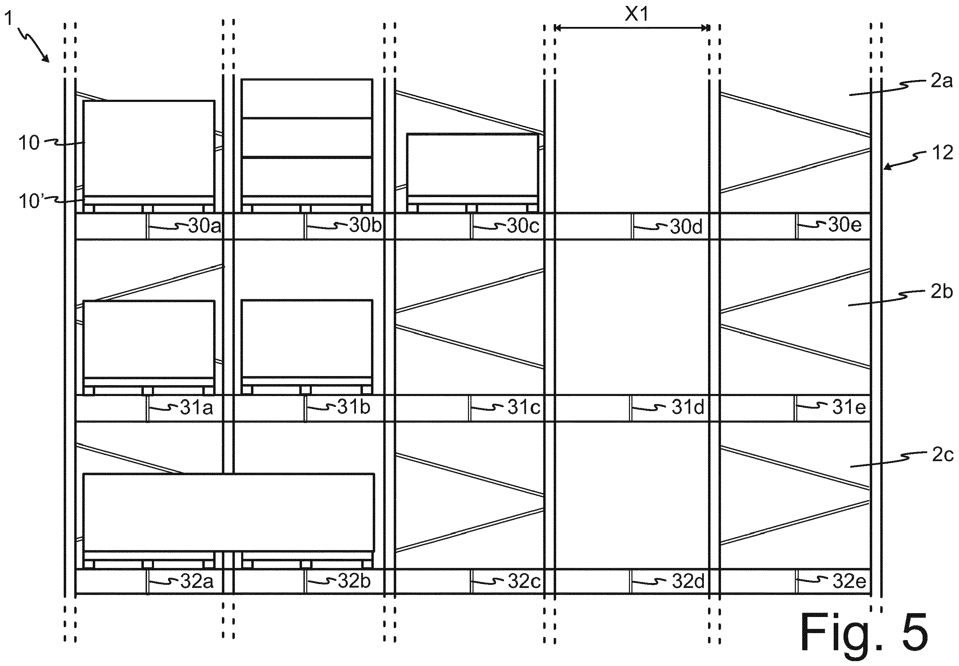

In an assembled state of the storage system 1 the side units 12a-c of each set are arranged beam to beam, spaced apart and subsequently of each other, see Fig. 5. Thus, the side units 12a-c are arranged on a straight line with a predetermined distance XI between each other. The number of side units 12a-c in each storage row 2a-f may of course vary depending on the area in which the storage system 1 should cover. Also, the distance XI between respective side unit may vary depending of e.g. the estimated load they should be able to carry.

Further, the second set of side units 12' is arranged spaced and opposite of the first set of side units 12, such that a space is defined between the two sets of side units 12, 12'. The space between the two sets of side units 12, 12' is shaped to house a number of different components, such as rail units 20a, 20b and a central support unit 28, as described in more detail below. These components could all be a part of a pre-mounted transport supporting arrangement 19.

The pre-mounted transport supporting arrangement 19 is mounted as one unit when constructing the storage system 1 in order to decrease the time spent on building the system. Several of these transport supporting arrangements 19 are arranged in each storage row, on each storage level, see Figs 2 and 3. For example, one transport supporting arrangement 19, as illustrated in Fig. 2, includes two parallel rail units 20a, 20b, six base units 22a-f and one central support unit 28. The pre-mounted arrangement 19 is attached to first one set of side units 12 by hooking all six base units 22a-f simultaneously to respective beams 14a-f of the first set of side units 12, and then attaching the second set of side units 12' and its beams 14a-f' to the opposite side of the base units 22a-f. Alternative embodiment of the pre-mounted transport supporting arrangement 19 includes more or less components than the illustrated example. In further alternative embodiment, there are no pre-mounted transport supporting arrangements, but all components of the storage system are assembled on site when building the storage system.

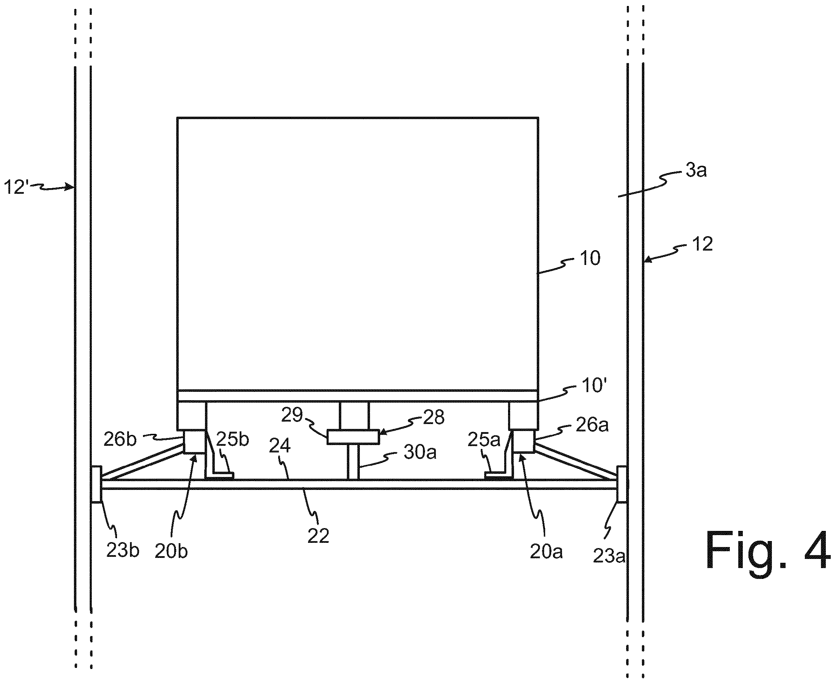

However, the components arranged between two opposite arranged side units 12, 12', see Fig. 4, are two spaced apart elongated rail units 20a, 20b. The rail units 20a, 20b extend parallel to the extension of the first and second set of side units 12, 12', along the entire extension of the storage row 3a. A first rail unit 20a is arranged in the vicinity of the first side unit 12 and a second rail unit 20b is arranged in the vicinity of the second side unit 12'. The rail units 20a, 20b may either be attached directly to the side units 12, 12', e.g. to the beams 14a, 14a' by means of the openings 17, or to the base unit 22, which in turn is attached to the side units 12, 12'. The two rail units 20a, 20b are, in the illustrated embodiment, attached to an upper surface 23 of the base unit 22.

Each elongated rail unit 20a, 20b has a rail 25a, 25b, on which a transportation unit 40 can run, and a rest portion 26a, 26b on which goods 10 and pallets 10' can be stored. The rail 25a of the first rail unit 20a is arranged to face the rail 25b of the opposite rail unit 20b. This means that the transportation unit 40 is able the operate in the space between the two rain units 20a, 20b and run on both rails 25a, 25b simultaneously. The rest portions 26a, 26b are, in the illustrated embodiment, arranged above respective rails 25a, 25b, slightly towards the side units. The space between the rail units 20a, 20b should be enough for a transportation unit 40 to operate in.

The storage system is also provided with a number of base units 22a-f as briefly described above, see Fig. 2. A base unit 22 extends between the side units 12, 12' perpendicular to the extension of the sets of side units 12, 12' and the elongated rail units 20a, 20b. It has mounting means 23a, 23b provided in each end configured to attach the base unit 22 to the beams 14a, 14a', of its desired location, of each side unit 20a, 20b. The elongated rail units 20a, 20b are, in the illustrated embodiment, attached to the upper surface 23 of the base unit 22. Throughout the extension of the two elongated rail units 20a, 20b of each storage row 3a-f there are provided several base units 22a-f, see Fig. 2. The amount of the base unit 22 per storage row 3a-f depends e.g. on the length of the storage row 3a-f, the load that the rail units 20a, 20b should be able to bear and possible construction limitations. The base units 22 are also configured to support a support legs 30a-e, 31a-e, 32a-e of the central support unit 28, which is described in more detail below. In an alternative embodiment, the base unit can be seen as a floor for each storage row of each storage level. It may then be arranged between the opposite located side units extending along the entire storage row, i.e. between two transportation aisles. The base unit is then attached to each beam of each side unit along the extension of the storage row.

Further, the storage system 1 is provided with a central support unit 28 arranged in the space between the rail units 20a, 20b for supporting goods 10 and especially the paper pallet 10' during the storage in the storage system, see Fig. 4. It is beneficial, as described above, when it is desirable to use a paper board pallet 10' which is often less rigid than a standard pallet. The central support unit 28 includes a support portion 29, which extends parallel to the extension of the rail units 20a, 20b, along the extension of the storage row 3a-f. The support portion 29 is configured to support the goods 10 and the paper board pallet 10' when stored in the storage system 1. The central support unit 28 further includes a number of support legs 30a-e, 31a-e, 32a-e for supporting the support portion 29. The support legs 30a-e, 31a-e, 32a-e are arranged spaced apart along the extension of the support portion 29, see Figs 3 and 4, and attached to either the base unit 22 or the support portion 29.

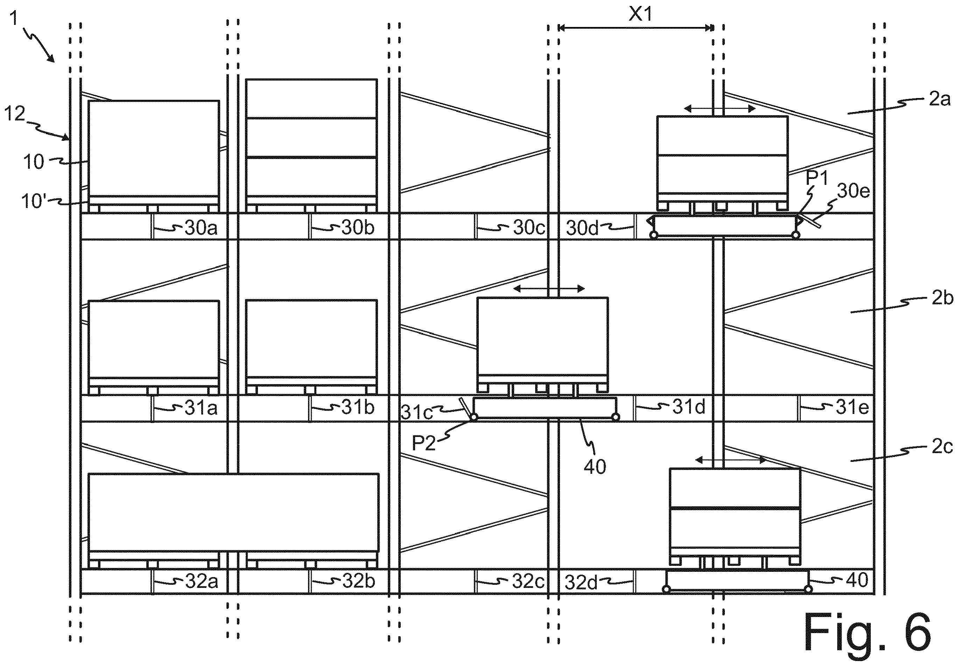

In order for a transportation unit 40 to move freely within the storage row 3a-f when transporting goods 10, each support leg 30a-e, 31a-e, 32a-e is hinged to either the base unit 22 or the support portion 29. Fig. 6 illustrate two possible types of support legs 30a-e, 31a-e, 32a-f and two possible types of transportation units 40a, 40b. The support legs 30a-e in the top storage row 3a are configured to be pushed upwards, against the support portion 29a, by the transportation unit 40a. The support legs 31a-e, 32a-e in the middle and bottom storage row 3b, 3c are configured to be pushed downwards, against the base unit 22, by the transportation unit 40b, 40c.

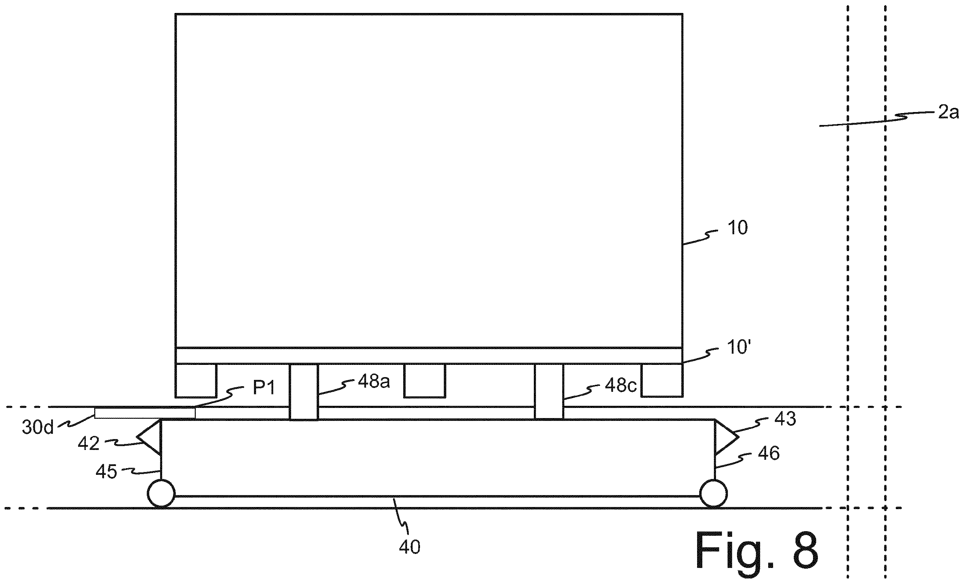

According to the first embodiment, the support legs 30a-e in the top storage row 3a are configured to move from a supporting position when it is in contact with the base unit 22a, to an un-supporting position, when the support leg 30a-e loses contact with the base unit 22a, and up towards the support portion 29a. As illustrated in Figs 6 and 8, each support leg 30a-e can pivot about 180 degrees around to pivot point P1 in the support portion 29a, from a basically vertical position to a basically horizontal position in both directions. This is preferred if the transportation unit 40 should be able to move both back and forth in the storage row 3a-f. In order for the support leg 30a-e to move back to its resting state, i.e. when the support leg 30a-e is un-affected by the transportation unit 40a, gravitation is used, forcing the support leg 30a-e down to the upright position, again supported by the base unit 22.

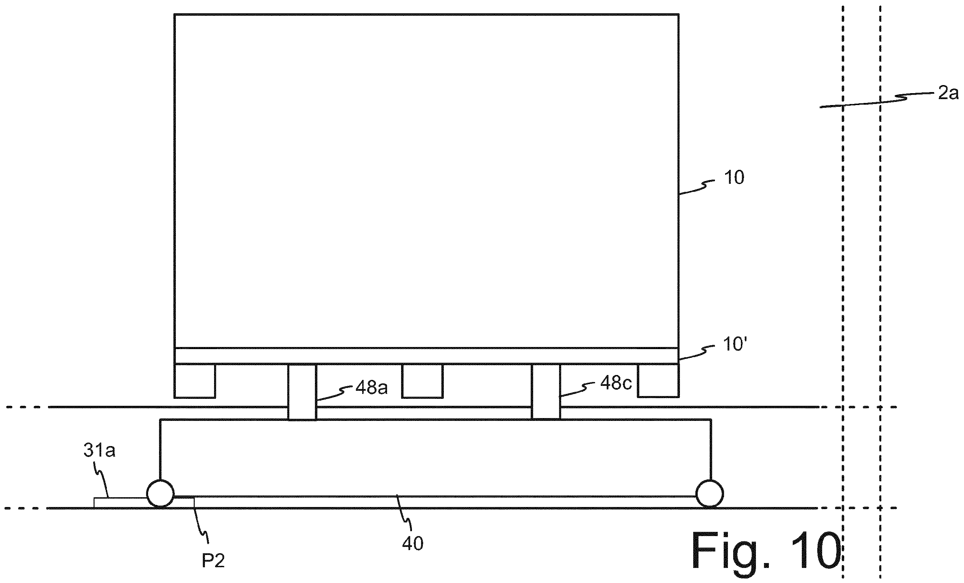

According to the second embodiment, the support legs 31a-e, 32a-e in the middle and bottom storage row 3b, 3c, are configured to move from a supporting position when they are in contact with respective support portion 29b, 29c, to an un-supporting position, when a support leg 31a-e, 32a-e loses contact with the support portion 29b, 29c, and down towards the base unit 33b, 22c. As illustrated in Figs 6 and 10 each support leg 31a-e, 32a-e can pivot about 180 degrees around the pivot point P2 in the base unit 22b, 22c, from a basically vertical position to a basically horizontal position in both directions. This is preferred for the same reason as previously described, namely so that the transportation unit 40b, 40c are able to move both back and forth in the storage row 3b, 3c. In order for the support leg 31a-e, 32a-e to move back to its resting state, i.e. when the support leg 31a-e, 32a-e is un-affected by the transportation unit 40b, 40c, it is biased, preferably by a spring (not shown) forcing the support leg 31a-e, 32a-e back to the upright position.

In an alternative embodiment (not shown), the support legs are only configured to pivot about 90 degrees, from a basically vertical position to a basically horizontal position in one direction. This is preferred if the transportation unit should only be able to move in one direction in the storage row.

The transportation unit 40a is configured to transport goods 10 in the storage row 2a-f, operating on the rails 25a, 25b of the rail units 20a, 20b. In order to transport the goods 10 without being disturbed by the central support unit 28 and the support legs 30a-e, 31a-e, 32a-e the transportation unit 40 is configured to affect and push on the support legs 30a-e, 31a-e, 32a-e of the central support unit 28 as it moves along the storage row 3a-f. The transportation unit 40 may be provided with at least one protrusion 42, 43, facilitating the removal of the support legs 30a-e, 31a-e, 32a-e. If the transportation unit 40 is only configured to move in one direction it is preferably only provided with one protrusion 42, 43, arranged on a front side 45, 46 of the transportation unit 40, i.e. the side which is in the front of the transportation unit 40, in the direction in which the transportation unit 40 moves. If this is the case, each support leg 30a-e, 31a-e, 32a-e only have to be able to pivot about 90 degrees, as explained above. If the transportation unit 40, however, is configured to move both back and forth in the storage row 2a-f, it is preferably provided with two protrusions 42, 43. The protrusions are arranged on opposite sides 45, 46 of the transportation unit 40 in order to be able to push on the support legs 30a-e, 31a-e, 32a-e as it moves back and forth in the storage row 2a-f. If this is the case, each support leg 30a-e, 31a-e, 32a-e have to be able to pivot about 180 degrees around its respective pivot point P1, P2.

In order to transport the pallets with goods 10 in the storage system 1 the transportation units 40 are provided with lifting means 48a-c. The lifting means 48a-c is configured to push on a bottom surface 49 of the pallet with goods 10 and raise it such that legs 50 of the pallets 10 are not in contact with either the rest portions 26a, 26b of the rail units 20a, 20b or the support portion 29 of the central support unit 28 during the transportation. When the transportation unit 40 reaches the storage destination of the pallet 10 the lifting means 48a-c lowers the pallet 10 until it rests on the rest portions 26a, 26b, see e.g. Fig. 6. In the illustrated embodiments there are four lifting means (only three visible) 48a-c but there may be more or less in alternative embodiment.

Finally, although the inventive concept has been described above with reference to specific embodiment, it is not intended to be limited to the specific form set forth herein. Rather, the invention is limited only by the accompanying claims. Other embodiments than the specific above are equally possible within the scope of these appended claims.

## Claims

1. A storage system for handling and storing pallets and/or goods, comprising:
a first set of pre-mounted side units (12) and a second set of pre-mounted side units (12'), wherein each side unit (12a-c) comprises at least two vertical beams (14a, 14b), wherein said side units (12a-c) of each set are arranged beam to beam, spaced apart and subsequently of each other, and wherein said second set of side units (12') is arranged spaced and opposite of said first set of side units (12),
at least two spaced apart elongated rail units (20a, 20b) arranged between said first set and said second set of side units (12, 12'), wherein each elongated rail unit (20a, 20b) comprises at least one rail (25a, 25b), on which a transportation unit (40) can operate, extending parallel to the extension of said first and second set of side units (12, 12'), and
at least one central support unit (28) arranged between said rail units (20a, 20b), comprising a support portion (29) extending parallel to the extension of said rails (25a, 25b) and configured to support pallets and/or goods (10, 10') during storage,
wherein said first set of side units (12), said second set of side units (12'), said rail units (20a, 20b) and said centrals support unit (28) are arranged to create a storage row (3a-f) of a storage level (2a-d) of said storage system (1).

2. The storage system according to claim 1, further comprising at least one base unit (22a-f) arranged between and mounted to said first and second set of side units (12, 12'), perpendicular to the extension of said sets of said side units (12, 12'), wherein said base unit (22a-f) is configured to support said at least two elongated rail units (20a, 20b).

3. The storage system according to claim 2, further comprising several base units (22a-f) arranged throughout the extension of said storage row (3a-f).

4. The storage system according to claim 2, wherein said base unit (22) extends throughout the extension of said storage row (3a-f)

5. The storage system according to any one of the preceding claims, wherein said at least two elongated rail units (20a, 20b), said at least one central support unit (28) and said at least one base unit (22a-f) are components of a pre-fabricated transport supporting arrangement (19).

6. The storage system according to any one of the preceding claims, wherein said central support unit (28) further comprises a number of support legs (30a-e, 31a-e, 32a-e) arranged spaced apart along the extension of said support portion (29).

7. The storage system according to claim 4, wherein each support leg (30a-e, 31a-e, 32a-e) is hinged to said base unit (22a-f).

8. The storage system according to claim 4, wherein each support leg (30a-e, 31a-e, 32a-e) is hinged to said support portion (29).

9. The storage system according to claim 7 or 8, wherein each support leg (30a-e, 31a-e, 32a-e) is able to pivot about 180 degrees around said hinge.

10. The storage system according to any one of the preceding claims, wherein each elongated rail unit (20a, 20b) further comprises a rest portion (26a, 26b) on which pallets and/or goods (10, 10') can rest during storage.

11. The storage system according to any one of the preceding claims, further comprising a transportations unit (40) for transporting goods and/or pallets (10, 10') in said storage row (3a-f) of said storage level (2a-d), configured to run on said rails (25a, 25b).

12. The storage system according to claim 11, wherein said transportation unit (40) is configured to affect and push on said support legs (30a-e, 31a-e, 32a-e) of said central support unit (28) as it moves along said storage row (3a-f).

13. The storage system according to claim 12, wherein said transportation unit (40) further comprises lifting means (48a-c) configured to lift the pallet and/or goods (10, 10') during transportation and lower the pallet and/or goods (10, 10') when placing it at the desired storing location in said storage system (1).

14. A pre-mounted transport supporting arrangement for a storage system, comprising
at least two spaced apart elongated rail units (20a, 20b) each comprising at least one rail (25a, 25b), on which a transportation unit (40) can operate, said rail (25a, 25b) extending parallel to an extension of a storage row (3a-f) of said storage system (1) in a mounted state,
at least one base unit (22a-f) extending perpendicular to the extension of said rail (25a, 25b) and configured to support said at least two elongated rail units (20a, 20b), and
at least one central support unit (28) arranged between said rail units (20a, 20b) and supported by said at least one base unit (22a-f), said central support unit (28) comprises a support portion (29) extending parallel to the extension of said rails (25a, 25b) and configured to support goods and/or pallets (10, 10') when stored in said storage system (1).

15. The pre-mounted transport supporting arrangement according to claim 14, wherein said central support unit (28) further comprises a number of support legs (30a-e, 31a-e, 32a-e) hinged to either said support portion (29) or said base unit (22a-f), wherein each support leg (30a-e, 31a-e, 32a-e) is configured to pivot about 180 degrees around said hinge.
